# EUROPEAN PATENT APPLICATION

(11) **EP 4 429 385 A1**
(43) Date of publication of application: **11.09.2024**
(21) Application number: 21962985.4
(22) Date of filing: 05.11.2021
(51) Int. Cl.: H04W 72/56

(54) **INFORMATION UPDATE METHOD AND APPARATUS, USER EQUIPMENT, BASE STATION, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2021/129133
(87) International publication number: WO 2023/077472

(57) **Abstract**

The present disclosure relates to the technical field of communications, and provides an information update method and apparatus, a user equipment, a base station, and a storage medium. The method comprises: receiving an updated cell-specific offset sent from a base station; receiving configuration information for indicating a time offset and/or a time window sent from the base station, the time offset being used for indicating delayed effective time of the updated cell-specific offset, and the time window being used for indicating ineffective time of the updated cell-specific offset; and using the updated cell-specific offset on the basis of the time offset and/or the time window. Communication performance can be ensured according to the method provided by the present disclosure.

## Description

### TECHNICAL FIELD

The present disclosure relates to the field of communication technologies, and particularly to, a method and an apparatus for information updating, a user equipment, a base station, and a storage medium.

### BACKGROUND

In a satellite communication system, a cell-specific offset and a UE (user equipment) specific offset (UE-specific offset) are usually introduced to compensate for transmission delay.

In related technologies, the cell-specific offset is updated as the satellite moves, so the base station usually indicates an updated cell-specific offset to the UE by sending updated system information to the UE.

However, in the related art, a distance between each UE and the base station in a same cell is different, so that each UE receives the updated system information sent by the base station at different times. That is, the time at which each UE obtains the updated cell-specific offset is different. At this time, the base station will enter into an ambiguity period. In the ambiguity period, when the base station communicates with different UEs, cell-specific offsets used by different UEs are different (that is, the base station does not know which cell-specific offset is used by a UE), which will affect the reliability of communication.

### SUMMARY

A method and an apparatus for information updating, a user equipment, a base station, and a storage medium are provided in the present disclosure, to solve the technical problem that the information update method in the related art tends to affect communication performance.

A method for information updating provided by embodiments of an aspect of the present disclosure is applied to a UE supporting satellite communication, and includes:
receiving an updated cell-specific offset sent by a base station;
receiving configuration information configured to indicate a time offset and/or a time window sent by the base station, in which the time offset is configured to indicate a delay effective time for the updated cell-specific offset, and the time window is configured to indicate an invalid time for the updated cell-specific offset; and
using the updated cell-specific offset based on the time offset and/or the time window.

A method for information updating provided by embodiments of another aspect of the present disclosure is applied to a base station supporting satellite communication, and includes:
determining a time offset and/or a time window, in which the time offset is configured to indicate a delay effective time for an updated cell-specific offset, and the time window is configured to indicate an invalid time for the updated cell-specific offset; and
sending configuration information configured to indicate the time offset and/or the time window to a UE; and
sending the updated cell-specific offset to the UE.

An apparatus for information updating provided by embodiments of yet another aspect of the present disclosure, includes:
a receiving module, configured to receive an updated cell-specific offset sent by a base station;
the receiving module is further configured to receive configuration information configured to indicate a time offset and/or a time window sent by the base station, in which the time offset is configured to indicate a delay effective time for the updated cell-specific offset, and the time window is configured to indicate an invalid time for the updated cell-specific offset; and
an update module, configured to use the updated cell-specific offset based on the time offset and/or the time window.

An apparatus for information updating provided by embodiments of yet another aspect of the present disclosure, includes:
a determining module, configured to determine a time offset and/or a time window, in which the time offset is configured to indicate a delay effective time for an updated cell-specific offset, and the time window is configured to indicate an invalid time for the updated cell-specific offset; and
a sending module, configured to send configuration information configured to indicate the time offset and/or the time window to a UE;
the sending module is further configured to send the updated cell-specific offset to the UE.

A communication device provided by embodiments of yet another aspect of the present disclosure, includes a processor and a memory. A computer program is stored in the memory, and the processor executes the computer program stored in the memory, to enable the device to perform the method provided in the embodiments of the foregoing aspect.

A communication device provided by embodiments of yet another aspect of the present disclosure, includes a processor and a memory. A computer program is stored in the memory, and the processor executes the computer program stored in the memory, to enable the device to perform the method provided in the embodiments of another aspect.

A communication device provided by embodiments of yet another aspect of the present disclosure, includes: a processor and an interface circuit;
the interface circuit is configured to receive code instructions and transmit the code instructions to the processor; and
the processor is configured to run the code instructions to perform the method provided in the embodiments of the foregoing aspect.

A communication device provided by embodiments of yet another aspect of the present disclosure, includes: a processor and an interface circuit;
the interface circuit is configured to receive code instructions and transmit the code instructions to the processor; and
the processor is configured to run the code instructions to perform the method provided in the embodiments of another aspect.

A computer-readable storage medium provided by embodiments of yet another aspect of the present disclosure, is configured to store instructions. When the instructions are executed, the method provided in the embodiments of the foregoing aspect is implemented.

A computer-readable storage medium provided by embodiments of yet another aspect of the present disclosure, is configured to store instructions. When the instructions are executed, the method provided in the embodiments of another aspect is implemented.

To sum up, in the method and the apparatus for information updating, the encoding device, the decoding device, and the storage medium provided by the embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in the embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

### BRIEF DESCRIPTION OF THE DRAWINGS

The above and/or additional aspects and advantages of the present disclosure will become apparent and understandable from the following description of embodiments in conjunction with the accompanying drawings.
Fig. 1a is a schematic diagram of communication between a UE and a base station in an information update method of a related art provided by an embodiment of the present disclosure.
Fig. 1b is a schematic flowchart of a method for information updating provided by an embodiment of the present disclosure.
Fig. 2a is a schematic flowchart of a method for information updating provided by an embodiment of the present disclosure.
FIG. 2b is a schematic diagram of communication between a UE and a base station in a method for information updating provided by an embodiment of the present disclosure.
FIG. 3 is a schematic flowchart of a method for information updating provided by an embodiment of the present disclosure.
Fig. 4a is a schematic flowchart of a method for information updating provided by an embodiment of the present disclosure.
Fig. 4b is a schematic flowchart of a method for information updating provided by an embodiment of the present disclosure.
FIG. 5 is a schematic flowchart of a method for information updating provided by an embodiment of the present disclosure.
Fig. 6a is a schematic flowchart of a method for information updating provided by an embodiment of the present disclosure.
Fig. 6b is a schematic flowchart of a method for information updating provided by an embodiment of the present disclosure.
Fig. 7a is a schematic flowchart of a method for information updating provided by an embodiment of the present disclosure.
Fig. 7b is a schematic flowchart of a method for information updating provided by an embodiment of the present disclosure.
FIG. 8 is a schematic flowchart of a method for information updating provided by an embodiment of the present disclosure.
FIG. 9 is a schematic flowchart of a method for information updating provided by an embodiment of the present disclosure.
FIG. 10 is a schematic flowchart of a method for information updating provided by an embodiment of the present disclosure.
Fig. 11a is a schematic flowchart of a method for information updating provided by an embodiment of the present disclosure.
Fig. 11b is a schematic flowchart of a method for information updating provided by an embodiment of the present disclosure.
Fig. 12a is a schematic flowchart of a method for information updating provided by an embodiment of the present disclosure.
Fig. 12b is a schematic flowchart of a method for information updating provided by an embodiment of the present disclosure.
FIG. 13 is a schematic structural diagram of an apparatus for information updating provided by an embodiment of the present disclosure.
FIG. 14 is a schematic structural diagram of an apparatus for information updating provided by another embodiment of the present disclosure.
Fig. 15 is a block diagram of a user equipment provided by an embodiment of the present disclosure.
Fig. 16 is a block diagram of a base station provided by an embodiment of the present disclosure.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all possible implementations consistent with the embodiments of the present disclosure. Rather, they are merely examples of apparatuses and methods consistent with aspects of the disclosed embodiments as recited in the appended claims.

Terms used in the embodiments of the present disclosure are for the purpose of describing specific embodiments only, and are not intended to limit the embodiments of the present disclosure. As used in the examples of the present disclosure and the appended claims, the singular forms "a" and "an" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only configured to distinguish information of the same type from one another. For example, without departing from the scope of the embodiments of the present disclosure, first information may also be called second information, and similarly, second information may also be called first information. Depending on the context, the words "if" and "in a case that" as used herein may be interpreted as "when" or "while" or "in response to determining that".

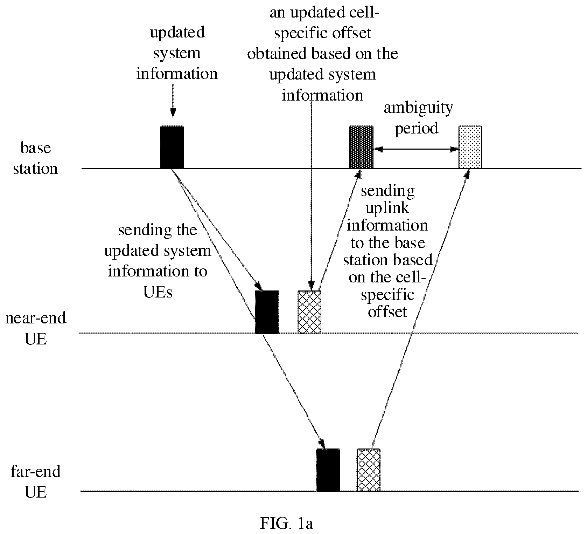

Fig. 1a is a schematic diagram of communication between a UE and a base station in an information update method of a related art provided by an embodiment of the present disclosure. As shown in Fig. 1a, a near-end UE in a cell that is closer to a base station will first receive an updated system information sent by the base station, a far-end UE in the cell that is far away from the base station will later receive the updated system information sent by the base station. Based on the fact that each UE receives the updated system information at different time points, there will be an ambiguity period in the base station. In the ambiguity period, the near-end UE has obtained the updated cell-specific offset, and uses the updated cell-specific offset to communicate with the base station, and the far-end UE has not obtained the updated cell-specific offset, and uses a cell-specific offset before update to communicate with the base station, which will lead to low communication reliability. Based on this, the present invention proposes a method and an apparatus for information updating, a user equipment, a base station and a storage medium to solve the technical problem that the information update method in the related art easily leads to low communication reliability.

A method and an apparatus for information updating, a user equipment, a base station, and a storage medium provided by an embodiment of the present disclosure will be described in detail below with reference to the accompanying drawings.

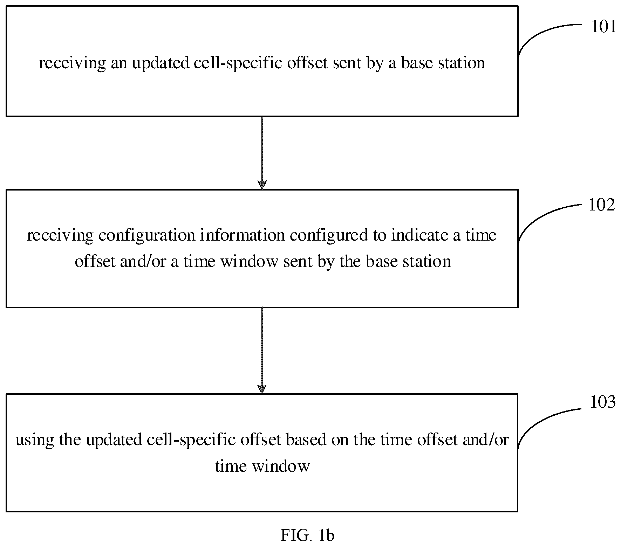

Fig. 1b is a schematic flowchart of a method for information updating provided by an embodiment of the present disclosure. The method is performed by a UE supporting satellite communication. As shown in Fig. 1b, the method for information updating may include the following steps.

Step 101: an updated cell-specific offset sent by a base station is received.

In an embodiment of the present disclosure, the base station may be a base station supporting satellite communication, and the UE may be a device that provides voice and/or data connectivity to a user. A terminal device may communicate with one or more core networks via RAN (radio access network), and the UE may be an IoT terminal, such as a sensor device, a mobile phone (or called "cellular" phone), or a computer having an IoT terminal, such as a fixed, portable, pocket, hand-held, built-in computer or vehicle-mounted device. For example, a station (STA), a subscriber unit, a subscriber station, a mobile station, a mobile, a remote station, an access point, a remote terminal, an access terminal, a user terminal, or a user agent. Alternatively, the UE may also be a device of an unmanned aerial vehicle. Alternatively, the UE may also be a vehicle-mounted device, for example, it may be a trip computer with a wireless communication function, or a wireless terminal connected externally to a trip computer. Alternatively, the UE may also be a roadside device, for example, it may be a street lamp, a signal lamp, or other roadside devices with a wireless communication function.

In an embodiment of the present disclosure, the base station sends a cell-specific offset to the UE via system information, and specifically, the cell-specific offset may be included in the system information. And, it should be noted that after the base station sends the cell-specific offset to the UE via system information, if the satellite in the satellite communication scenario where the base station is located moves relative to the cell, the base station needs to update the cell-specific offset, and needs to send the updated cell-specific offset to the UE via updated system information.

Based on this, the base station may determine whether to indicate the updated cell-specific offset to the UE based on the satellite communication scenario where the UE and the base station are located.

Specifically, in an embodiment of the present disclosure, the base station will determine the satellite communication scenario where the base station and the UE are located based on the ephemeris information. When the base station determines that the satellite communication scenario where the UE and the base station are located is a GEO (geostationary earth orbit) scenario, it means that the satellite is stationary relative to the ground. At this time, the base station does not need to indicate the updated cell-specific offset to the UE, that is, the base station does not send the updated cell-specific offset to the UE. When the base station determines that the satellite communication scenario where the UE and the base station are located is an NGSO (non-geostationary orbit) scenario, it means that the satellite will move relative to the ground. At this time, when the satellite moves relative to the ground, the base station needs to send the updated cell-specific offset to the UE via the updated system information.

Step 102: configuration information configured to indicate a time offset and/or a time window sent by the base station is received.

In an embodiment of the present disclosure, the time offset may be configured to indicate a delay effective time for the updated cell-specific offset, and the time window may be configured to indicate an invalid time for the updated cell-specific offset. And, the detailed introduction about the time offset and the time window will be described in following embodiments.

Further, in an embodiment of the present disclosure, receiving, by the UE, the configuration information configured to indicate the time offset and/or the time window sent by the base station may include at least one of:
receiving the configuration information sent by the base station via a UE-specific signaling; or
receiving the configuration information sent by the base station via a common signaling.

Step 103: the updated cell-specific offset is used based on the time offset and/or the time window.

The detailed introduction about step 103 will be described in following embodiments.

In addition, it should be noted that, in an embodiment of the present disclosure, the execution sequence of the above steps 101 to 103 is only an execution sequence of an example of the present disclosure, and is not a fixed sequence. For example, in one embodiment of the present disclosure, there is no fixed sequence between the above-mentioned step 101 and step 102, in which, step 101 may be executed first, and then step 102 may be executed, or step 102 may be executed first, and then step 101.

To sum up, in the method for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

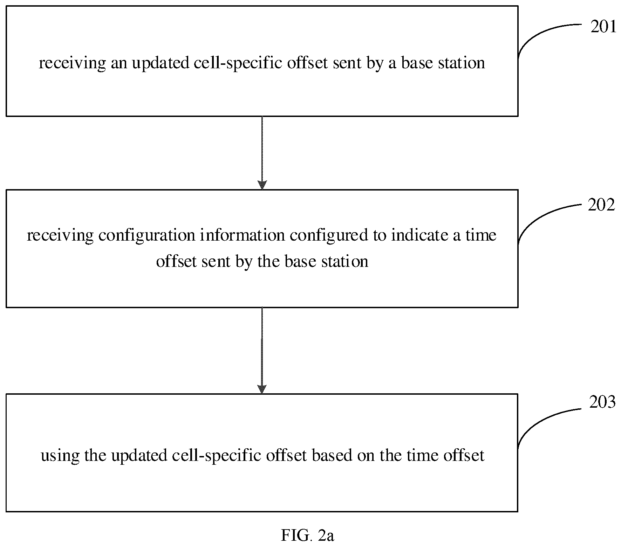

Fig. 2a is a schematic flowchart of a method for information updating provided by an embodiment of the present disclosure. The method is performed by a UE supporting satellite communication. As shown in Fig. 2a, the method for information updating may include the following steps.

Step 201: an updated cell-specific offset sent by a base station is received.

For the related introduction of step 201, reference may be made to the description of the above-mentioned embodiments, and details will not be repeated here for this embodiment of the present disclosure.

Step 202: configuration information configured to indicate a time offset sent by the base station is received.

In an embodiment of the present disclosure, the time offset may be configured to indicate a delay effective time for the updated cell-specific offset.

In an embodiment of the present disclosure, the time offset may be determined by the base station based on RTT (round trip time) of signal transmission within its coverage area. Moreover, in an embodiment of the present disclosure, the time offsets corresponding to different UEs in the cell will be different. And, in an embodiment of the present disclosure, a value of the time offset may be inversely proportional to a distance between a UE and the base station. For example, a UE farther away from the base station corresponds to a smaller time offset, and a UE closer to the base station corresponds to a larger time offset.

Further, in an embodiment of the present disclosure, the time offset may be a fixed value. In another embodiment of the present disclosure, the time offset may be a configurable value.

Step 203: the updated cell-specific offset is used based on the time offset.

In an embodiment of the present disclosure, using the updated cell-specific offset based on the time offset may include: in response to receiving the updated cell-specific offset, communicating with the base station using a cell-specific offset before update within the time offset, and/or, communicating with the base station using the updated cell-specific offset, after delaying for the time offset.

It should be noted that, in an embodiment of the present disclosure, the time offset should satisfy the following condition: the time offset enables the base station to have the same understanding of a cell-specific offset used by each UE in the cell. That is, when each UE in the cell communicates with the base station using the updated cell-specific offset, after delaying for the corresponding time offset, there is no ambiguity period for the base station. The ambiguity period is: due to a difference of distance between each UE and the base station in the cell and other reasons, a time point at which each UE receives the updated cell-specific offset is different, so there is a period of time for the base station in which cell-specific offsets used by different UEs in the cell for communication with the base station are different. For example, some UEs in the cell (such as near-end UEs with a relatively short distance from the base station) use the updated cell-specific offset to communicate with the base station, and another part of UEs in the cell (such as far-end UEs with a short distance to the base station) use the cell-specific offset before update to communicate with the base station.

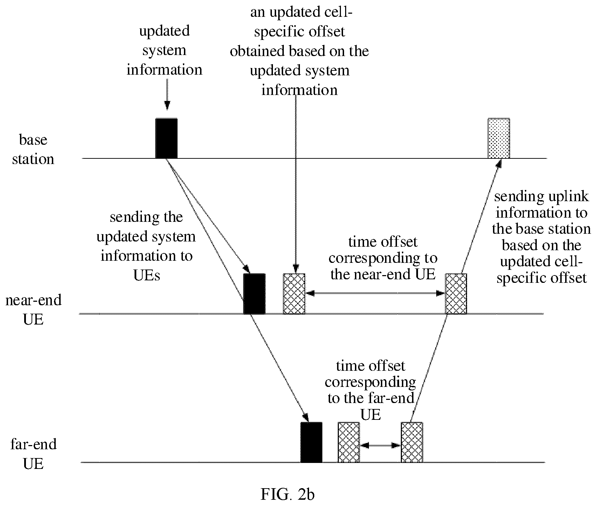

As an example, FIG. 2b is a schematic diagram of communication between a UE and a base station in a method for information updating provided by an embodiment of the present disclosure. As shown in FIG. 2b, the base station determines updated system information, and the updated system information includes an updated cell-specific offset, then the base station broadcasts the updated system information to each UE in the cell, in which a near-end UE receives the updated system information first, and a far-end UE receives the updated system information later. After receiving the updated system information, each UE parses the updated system information to obtain the updated cell-specific offset. After obtaining the updated cell-specific offset, each UE will not immediately communicate with the base station based on the updated cell-specific offset, but first communicates with the base station based on a cell-specific offset before update, and then communicates with the base station based on the updated cell-specific offset after delaying for the corresponding time offset. Thereby ensuring that the base station has the same understanding of the cell-specific offset used by each UE in the cell, and avoiding the occurrence of ambiguity, to ensure the reliability of communication.

To sum up, in the method for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

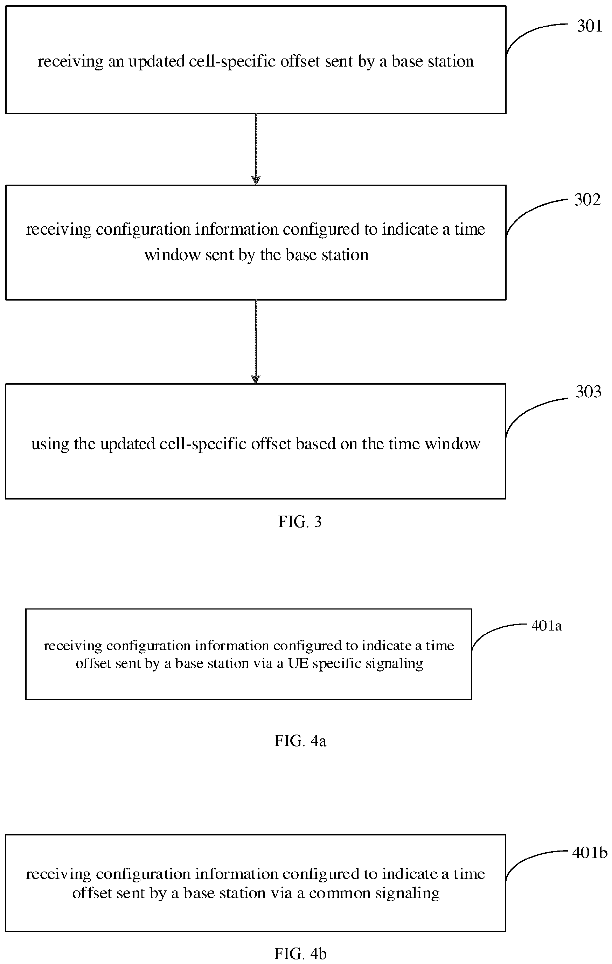

FIG. 3 is a schematic flow chart of a method for information updating provided by an embodiment of the present disclosure. The method is executed by a UE supporting satellite communication. As shown in FIG. 3, the method for information updating may include the following steps.

Step 301: an updated cell-specific offset sent by a base station is received.

For the relevant introduction of step 301, reference may be made to the description of the above-mentioned embodiments, and details will not be repeated here for this embodiment of the present disclosure.

Step 302: configuration information configured to indicate a time window sent by the base station is received.

In an embodiment of the present disclosure, the time window may be configured to indicate an invalid time for the updated cell-specific offset. Step 303: the updated cell-specific offset is used based on the time offset.

In an embodiment of the present disclosure, using the updated cell-specific offset based on the time offset may include: communicating with the base station using a UE-specific offset within the time window; communicating with the base station using the updated cell-specific offset after the time window. The cell-specific offset before update is used for communication before this time window.

Further, the above-mentioned method of "communicating with the base station using the UE-specific offset within the time window" may include at least one of:
method one: within the time window, the UE performs a communication operation that requires to use a cell-specific offset based on the UE-specific offset; or
method two: within the time window, the UE does not perform a communication operation that requires to use a cell-specific offset.

In an embodiment of the present disclosure, the above-mentioned communication operation may specifically be an uplink operation and/or a downlink operation between the UE and the base station.

It should be noted that, in an embodiment of the present disclosure, the time window should satisfy the following condition: the time window enables the base station to have the same understanding of a cell-specific offset used by each UE in the cell. That is, when each UE in the cell communicates with the base station using the updated cell-specific offset, after delaying for the corresponding time window, there is no ambiguity period for the base station. The ambiguity period is: due to a difference of distance between each UE and the base station in the cell, a time point at which each UE receives the updated cell-specific offset is different, so there is a period of time for the base station in which cell-specific offsets used by different UEs in the cell for communication with the base station are different. For example, some UEs in the cell (such as near-end UEs with a relatively short distance from the base station) use the updated cell-specific offset to communicate with the base station, and another part of UEs in the cell (such as far-end UEs with a short distance to the base station) use the cell-specific offset before update to communicate with the base station.

In addition, it should be understood that the UE-specific offset may be determined according to a protocol agreement, and may also be determined via signaling transmission, or may be determined according to other methods, which is not limited in the present disclosure.

To sum up, in the method for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

Fig. 4a is a schematic flowchart of a method for information updating provided by an embodiment of the present disclosure. The method is performed by a UE supporting satellite communication. As shown in Fig. 4a, the method for information updating may include the following steps.

Step 401a: configuration information configured to indicate a time offset sent by a base station via a UE specific signaling is received.

For the relevant introduction about step 401a, reference may be made to the description of the above-mentioned embodiments. To sum up, in the method for information updating provided by embodiments of the present disclosure, the UE receives the configuration information configured to indicate the time offset sent by the base station, in which the time offset is configured to indicate the delay effective time for the updated cell-specific offset. When the UE receives the updated cell-specific offset sent by the base station, the UE uses the updated cell-specific offset based on the time offset. It can be seen that in embodiments of the present disclosure, the effective time for the updated cell-specific offset is determined specifically through the time offset, so as to ensure that when each UE in the cell sends uplink information to the base station based on the updated cell-specific offset, the base station has the same understanding of cell-specific offsets used by different UEs, to ensure the reliability of communication.

Fig. 4b is a schematic flowchart of a method for information updating provided by an embodiment of the present disclosure. The method is performed by a UE supporting satellite communication. As shown in Fig. 4b, the method for information updating may include the following steps.

Step 401b: configuration information configured to indicate a time offset sent by a base station via a common signaling is received.

For the related introduction of step 401b, reference may be made to the description of the above-mentioned embodiments.

To sum up, in the method for information updating provided by embodiments of the present disclosure, the UE receives the configuration information configured to indicate the time offset sent by the base station, in which the time offset is configured to indicate the delay effective time for the updated cell-specific offset. When the UE receives the updated cell-specific offset sent by the base station, the UE uses the updated cell-specific offset based on the time offset. It can be seen that in embodiments of the present disclosure, the effective time for the updated cell-specific offset is determined specifically through the time offset, so as to ensure that when each UE in the cell sends uplink information to the base station based on the updated cell-specific offset, the base station has the same understanding of cell-specific offsets used by different UEs, to ensure the reliability of communication.

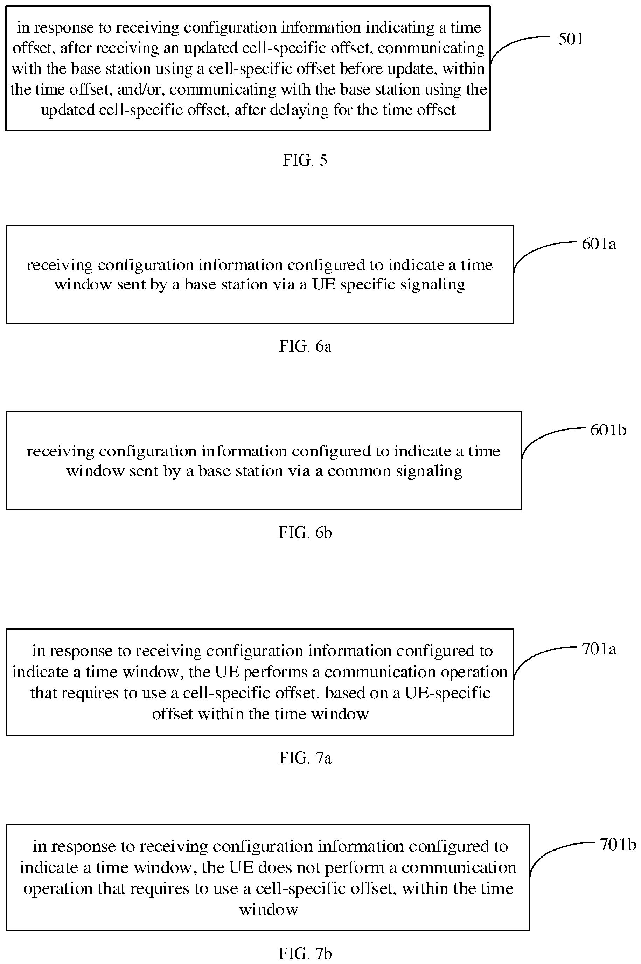

FIG. 5 is a schematic flow chart of a method for information updating provided by an embodiment of the present disclosure. The method is executed by a UE supporting satellite communication. As shown in FIG. 5, the method for information updating may include the following steps.

Step 501: in response to receiving configuration information indicating a time offset, after receiving an updated cell-specific offset, a cell-specific offset before update is used to communicate with the base station within the time offset, and/or, after delaying for the time offset, the updated cell-specific offset is used to communicate with the base station.

For the relevant introduction about step 501, reference may be made to the description of the above-mentioned embodiments.

To sum up, in the method for information updating provided by embodiments of the present disclosure, the UE receives the configuration information configured to indicate the time offset sent by the base station, in which the time offset is configured to indicate the delay effective time for the updated cell-specific offset. When the UE receives the updated cell-specific offset sent by the base station, the UE uses the updated cell-specific offset based on the time offset. It can be seen that in embodiments of the present disclosure, the effective time for the updated cell-specific offset is determined specifically through the time offset, so as to ensure that when each UE in the cell sends uplink information to the base station based on the updated cell-specific offset, the base station has the same understanding of cell-specific offsets used by different UEs, to ensure the reliability of communication.

Fig. 6a is a schematic flowchart of a method for information updating provided by an embodiment of the present disclosure. The method is executed by a UE supporting satellite communication. As shown in Fig. 6a, the method for information updating may include the following steps.

Step 601a: configuration information configured to indicate a time window sent by a base station via a UE specific signaling is received.

For the relevant introduction about step 601a, reference may be made to the description of the above-mentioned embodiments.

To sum up, in the method for information updating provided by embodiments of the present disclosure, the UE receives the configuration information configured to indicate the time window sent by the base station, in which the time window is configured to indicate the delay effective time for the updated cell-specific offset. When the UE receives the updated cell-specific offset sent by the base station, the UE uses the updated cell-specific offset based on the time window. It can be seen that in embodiments of the present disclosure, the effective time for the updated cell-specific offset is determined specifically through the time window, so as to ensure that when each UE in the cell sends uplink information to the base station based on the updated cell-specific offset, the base station has the same understanding of cell-specific offsets used by different UEs, to ensure the reliability of communication.

Fig. 6b is a schematic flowchart of a method for information updating provided by an embodiment of the present disclosure. The method is performed by a UE supporting satellite communication. As shown in Fig. 6b, the method for information updating may include the following steps.

Step 601b: configuration information configured to indicate a time window sent by a base station via a common signaling is received.

For related introductions about step 601b, reference may be made to the descriptions in the above-mentioned embodiments.

To sum up, in the method for information updating provided by embodiments of the present disclosure, the UE receives the configuration information configured to indicate the time window sent by the base station, in which the time window is configured to indicate an invalid time for the updated cell-specific offset. When the UE receives the updated cell-specific offset sent by the base station, the UE uses the updated cell-specific offset based on the time window. It can be seen that in embodiments of the present disclosure, the effective time for the updated cell-specific offset is determined specifically through the time window, so as to ensure that when each UE in the cell sends uplink information to the base station based on the updated cell-specific offset, the base station has the same understanding of cell-specific offsets used by different UEs, to ensure the reliability of communication.

And, it should be noted that, in addition to "receiving configuration information configured to indicate the time window by receiving the UE-specific signaling and/or common signaling" described in the above-mentioned embodiments, in another embodiment of the present disclosure, the UE may also obtain the configuration information configured to indicate the time window in a protocol stipulation manner, or may also receive the configuration information configured to indicate the time window by receiving other signaling sent by the base station.

Fig. 7a is a schematic flowchart of a method for information updating provided by an embodiment of the present disclosure. The method is performed by a UE supporting satellite communication. As shown in Fig. 7a, the method for information updating may include the following steps.

Step 701a: in response to receiving configuration information configured to indicate a time window, the UE performs a communication operation that requires to use a cell-specific offset based on a UE-specific offset within the time window,.

For the relevant introduction about step 701a, reference may be made to the description of the above-mentioned embodiments.

To sum up, in the method for information updating provided by embodiments of the present disclosure, the UE receives the configuration information configured to indicate the time offset sent by the base station, in which the time window is configured to indicate an invalid time for the updated cell-specific offset. When the UE receives the updated cell-specific offset sent by the base station, the UE uses the updated cell-specific offset based on the time offset. It can be seen that in embodiments of the present disclosure, the effective time for the updated cell-specific offset is determined specifically through the time offset, so as to ensure that when each UE in the cell sends uplink information to the base station based on the updated cell-specific offset, the base station has the same understanding of cell-specific offsets used by different UEs, to ensure the reliability of communication.

Fig. 7b is a schematic flowchart of a method for information updating provided by an embodiment of the present disclosure. The method is performed by a UE supporting satellite communication. As shown in Fig. 7a, the method for information updating may include the following steps.

Step 701b: in response to receiving configuration information configured to indicate a time window, the UE does not perform a communication operation that requires to use a cell-specific offset within the time window.

For the relevant introduction about step 701b, reference may be made to the description of the above-mentioned embodiments.

To sum up, in the method for information updating provided by embodiments of the present disclosure, the UE receives the configuration information configured to indicate the time offset sent by the base station, in which the time offset is configured to indicate a delay effective time for the updated cell-specific offset. When the UE receives the updated cell-specific offset sent by the base station, the UE uses the updated cell-specific offset based on the time offset. It can be seen that in embodiments of the present disclosure, the effective time for the updated cell-specific offset is determined specifically through the time offset, so as to ensure that when each UE in the cell sends uplink information to the base station based on the updated cell-specific offset, the base station has the same understanding of cell-specific offsets used by different UEs, to ensure the reliability of communication.

And, it should be noted that the above-mentioned embodiments are example embodiments provided by the present disclosure, and the above-mentioned embodiments may also be combined with each other. For example, the above-mentioned embodiments corresponding to FIG. 2 and FIG. 3 may be combined together. That is, the base station may simultaneously send the configuration information configured to indicate the time offset and the time window to the UE, and the UE may use the updated cell-specific offset based on the time offset and the time window.

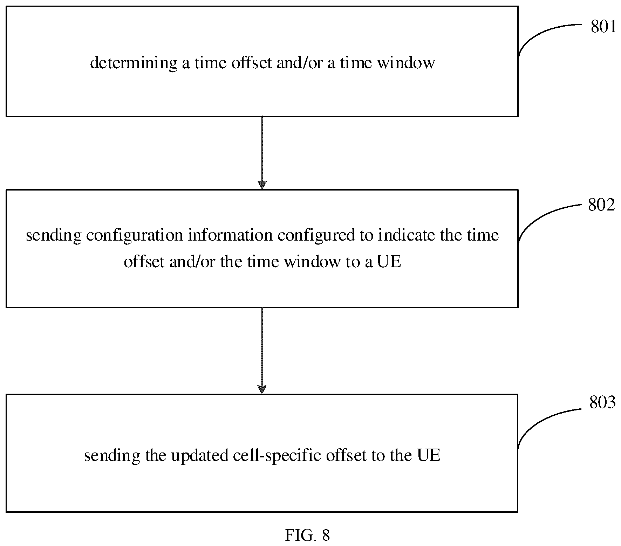

Fig. 8 is a schematic flowchart of a method for information updating provided by an embodiment of the present disclosure. The method is performed by a base station supporting satellite communication. As shown in Fig. 8, the method for information updating may include the following steps.

Step 801: a time offset and/or a time window is determined.

In an embodiment of the present disclosure, the base station may determine the time offset based on a maximum RTT of signal transmission within its coverage. In an embodiment of the present disclosure, the time offset may be configured to indicate a delay effective time of an updated cell-specific offset. Moreover, in an embodiment of the present disclosure, time offsets corresponding to different UEs in a cell are different. And, in an embodiment of the present disclosure, a value of the time offset may be inversely proportional to a distance between a UE and the base station. For example, a UE farther away from the base station corresponds to a smaller time offset, and the UE closer to the base station corresponds to a larger time offset.

It should be noted that, in an embodiment of the present disclosure, the time offset should satisfy the following condition: the time offset enables the base station to have the same understanding of a cell-specific offset used by each UE in the cell. That is, when each UE in the cell communicates with the base station using the updated cell-specific offset, after delaying for the corresponding time offset, there is no ambiguity period for the base station. The ambiguity period is: due to a difference of distance between each UE and the base station in the cell, a time point at which each UE receives the updated cell-specific offset is different, so there is a period of time for the base station in which cell-specific offsets used by different UEs in the cell for communication with the base station are different. For example, some UEs in the cell (such as near-end UEs with a relatively short distance from the base station) use the updated cell-specific offset to communicate with the base station, and another part of UEs in the cell (such as far-end UEs with a short distance to the base station) uses a cell-specific offset before update to communicate with the base station.

Further, in an embodiment of the present disclosure, the time offset may be a fixed value. In another embodiment of the present disclosure, the time offset may be a configurable value.

Further, the above-mentioned time window may be configured to indicate an invalid time for the updated cell-specific offset. Specifically, in an embodiment of the present disclosure, the time window should satisfy the following condition: the time window enables the base station to have the same understanding of a cell-specific offset used by each UE in the cell. That is, when each UE in the cell communicates with the base station using the updated cell-specific offset, after delaying for the corresponding time window, there is no ambiguity period for the base station. The ambiguity period is: due to a difference of distance between each UE and the base station in the cell, a time point at which each UE receives the updated cell-specific offset is different, so there is a period of time for the base station in which cell-specific offsets used by different UEs in the cell for communication with the base station are different. For example, some UEs in the cell (such as near-end UEs with a relatively short distance from the base station) use the updated cell-specific offset to communicate with the base station, and another part of UEs in the cell (such as far-end UEs with a short distance to the base station) use the cell-specific offset before update to communicate with the base station.

Step 802: configuration information configured to indicate the time offset and/or the time window is sent to a UE.

In an embodiment of the present disclosure, sending, by the base station, the configuration information configured to indicate the time offset and/or the time window to the UE may include:
sending the configuration information to the UE via a UE-specific signaling; or
sending the configuration information to the UE via a common signaling.

Step 803: the updated cell-specific offset is sent to the UE.

In an embodiment of the present disclosure, the base station may determine whether to indicate the updated cell-specific offset to the UE based on a satellite communication scenario where the UE and the base station are located.

Specifically, in an embodiment of the present disclosure, the base station determines the satellite communication scenario where the base station and the UE are located based on ephemeris information. When the base station determines that the satellite communication scenario where the UE and the base station are located is a GEO scenario, the base station does not indicate the updated cell-specific offset to the UE, that is, the base station does not send the updated cell-specific offset to the UE. When the base station determines that the satellite communication scenario where the UE and the base station are located is an NGSO scenario, the base station sends the updated specific offset to the UE.

And, it should be noted that, in an embodiment of the present disclosure, the execution order of the above steps 801 to 803 is only an execution order of an example of the present disclosure, and is not a fixed order. For example, in an embodiment of the present disclosure, there is no fixed sequence between the above-mentioned step 802 and step 803, in which step 802 may be executed first, and then step 803 may be executed, or step 803 may be executed first, and then Step 802.

And, for other introductions about the above-mentioned steps 801-803, reference may be made to the description of the above-mentioned embodiments, and details will not be repeated here for this embodiment of the present disclosure.

To sum up, in the method for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

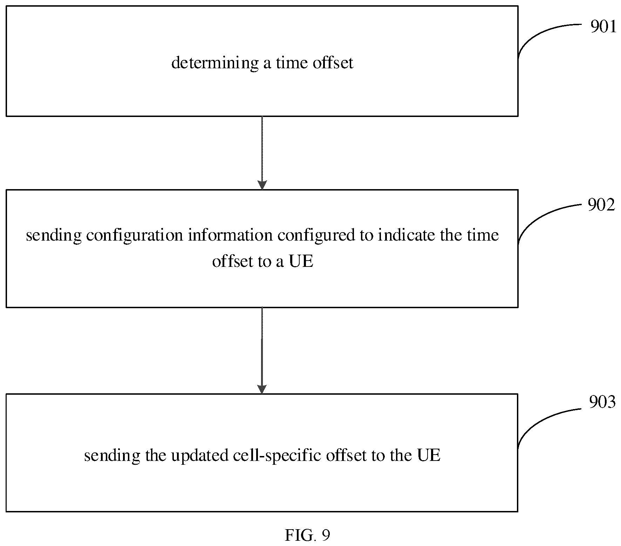

FIG. 9 is a schematic flow chart of a method for information updating provided by an embodiment of the present disclosure. The method is performed by a base station supporting satellite communication. As shown in FIG. 9, the method for information updating may include the following steps.

Step 901: a time offset is determined.

Step 902: configuration information configured to indicate the time offset is sent to a UE.

Step 903: an updated cell-specific offset is sent to the UE.

And, for the detailed introduction of the above-mentioned steps 901-903, reference may be made to the description of the above-mentioned embodiments, and details will not be repeated here for this embodiment of the present disclosure.

To sum up, in the method for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

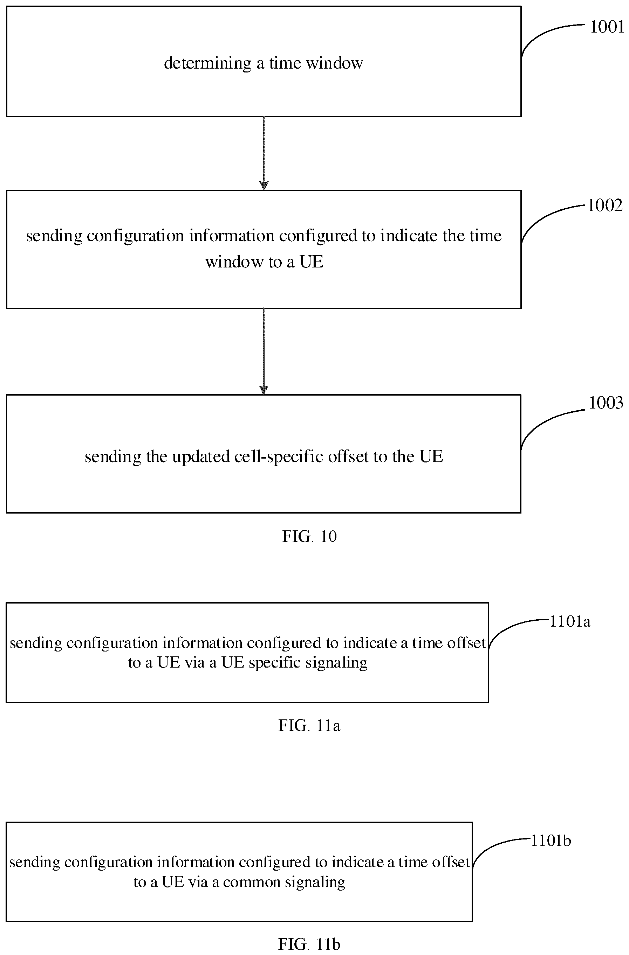

FIG. 10 is a schematic flow chart of a method for information updating provided by an embodiment of the present disclosure. The method is performed by a base station supporting satellite communication. As shown in FIG. 10, the method for information updating may include the following steps.

Step 1001: a time window is determined.

Step 1002: configuration information configured to indicate the time window is sent to a UE.

Step 1003: an updated cell-specific offset is sent to the UE.

And, for the detailed introduction of the above-mentioned steps 1001-1003, reference may be made to the description of the above-mentioned embodiments, and details will not be repeated here for this embodiment of the present disclosure.

To sum up, in the method for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

Fig. 11a is a schematic flowchart of a method for information updating provided by an embodiment of the present disclosure. The method is performed by a base station supporting satellite communication. As shown in Fig. 11a, the method for information updating may include the following steps.

Step 1101a: configuration information configured to indicate a time offset is sent to a UE via a UE specific signaling.

For a detailed introduction of the above step 1101a, reference may be made to the description of the above-mentioned embodiments, and details will not be repeated here for this embodiment of the present disclosure.

To sum up, in the method for information updating provided by embodiments of the present disclosure, the UE receives the configuration information configured to indicate the time offset sent by the base station, in which the time offset is configured to indicate the delay effective time for the updated cell-specific offset. When the UE receives the updated cell-specific offset sent by the base station, the UE uses the updated cell-specific offset based on the time offset. It can be seen that in embodiments of the present disclosure, the effective time for the updated cell-specific offset is determined specifically through the time offset, so as to ensure that when each UE in the cell sends uplink information to the base station based on the updated cell-specific offset, the base station has the same understanding of cell-specific offsets used by different UEs, to ensure the reliability of communication.

Fig. 11b is a schematic flowchart of a method for information updating provided by an embodiment of the present disclosure. The method is performed by a base station supporting satellite communication. As shown in Fig. 11b, the method for information updating may include the following steps.

Step 1101b: configuration information configured to indicate a time offset is sent to a UE via a common signaling.

For the detailed introduction of the above step 1101b, reference may be made to the description of the above-mentioned embodiments, and details will not be repeated here for this embodiment of the present disclosure.

To sum up, in the method for information updating provided by embodiments of the present disclosure, the UE receives the configuration information configured to indicate the time offset sent by the base station, in which the time offset is configured to indicate the delay effective time for the updated cell-specific offset. When the UE receives the updated cell-specific offset sent by the base station, the UE uses the updated cell-specific offset based on the time offset. It can be seen that in embodiments of the present disclosure, the effective time for the updated cell-specific offset is determined specifically through the time offset, so as to ensure that when each UE in the cell sends uplink information to the base station based on the updated cell-specific offset, the base station has the same understanding of cell-specific offsets used by different UEs, to ensure the reliability of communication.

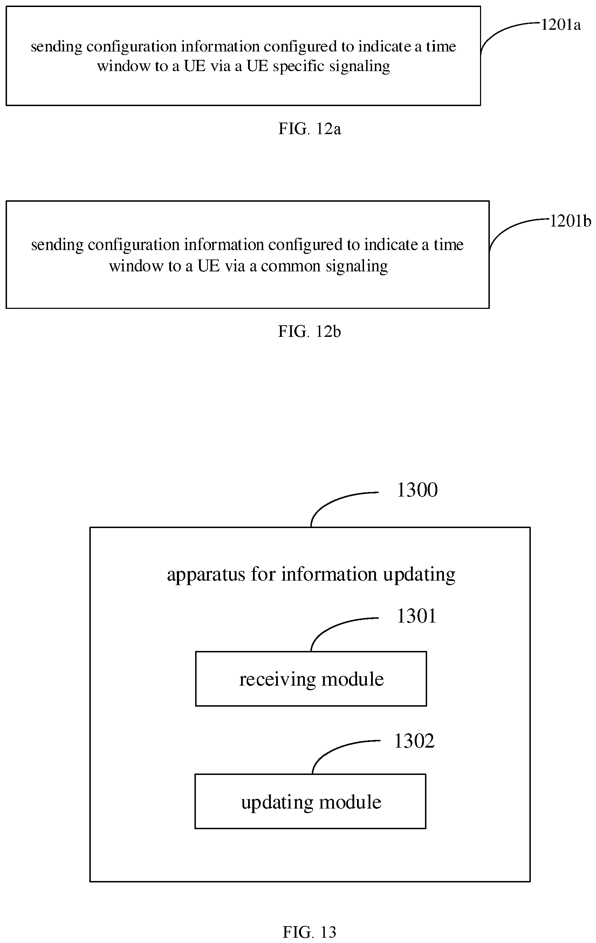

Fig. 12a is a schematic flowchart of a method for information updating provided by an embodiment of the present disclosure. The method is performed by a base station supporting satellite communication. As shown in Fig. 11a, the method for information updating may include the following steps.

Step 1201a: configuration information configured to indicate a time window is sent to a UE via a UE specific signaling.

For the detailed introduction of the above step 1201a, reference may be made to the description of the above-mentioned embodiments, and details will not be repeated here for this embodiment of the present disclosure.

To sum up, in the method for information updating provided by embodiments of the present disclosure, the UE receives the configuration information configured to indicate the time window sent by the base station, in which the time window is configured to indicate the invalid time for the updated cell-specific offset. When the UE receives the updated cell-specific offset sent by the base station, the UE uses the updated cell-specific offset based on the time window. It can be seen that in embodiments of the present disclosure, the effective time for the updated cell-specific offset is determined specifically through the time window, so as to ensure that when each UE in the cell sends uplink information to the base station based on the updated cell-specific offset, the base station has the same understanding of cell-specific offsets used by different UEs, to ensure the reliability of communication.

Fig. 12b is a schematic flowchart of a method for information updating provided by an embodiment of the present disclosure. The method is performed by a base station supporting satellite communication. As shown in Fig. 12b, the method for information updating may include the following steps.

Step 1201b: configuration information configured to indicate a time window is sent to a UE via a common signaling.

For the detailed introduction of the above step 1201b, reference may be made to the description of the above-mentioned embodiments, and details will not be repeated here for this embodiment of the present disclosure.

To sum up, in the method for information updating provided by embodiments of the present disclosure, the UE receives the configuration information configured to indicate the time window sent by the base station, in which the time window is configured to indicate the invalid time for the updated cell-specific offset. When the UE receives the updated cell-specific offset sent by the base station, the UE uses the updated cell-specific offset based on the time window. It can be seen that in embodiments of the present disclosure, the effective time for the updated cell-specific offset is determined specifically through the time window, so as to ensure that when each UE in the cell sends uplink information to the base station based on the updated cell-specific offset, the base station has the same understanding of cell-specific offsets used by different UEs, to ensure the reliability of communication.

Fig. 13 is a schematic structural diagram of an apparatus for information updating provided by embodiments of the present disclosure. As shown in Fig. 13, the apparatus 1300 may include:
a receiving module 1301, configured to receive an updated cell-specific offset sent by a base station;
the receiving module 1301 is further configured to receive configuration information configured to indicate a time offset and/or a time window sent by the base station, in which the time offset is configured to indicate a delay effective time for the updated cell-specific offset, the time window is configured to indicate an invalid time for the updated cell-specific offset; and
an updating module 1302, configured to update a cell-specific offset based on the time offset and/or the time window.

To sum up, in the apparatus for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

Optionally, in an embodiment of the present disclosure, the receiving module is further configured to:
receive the updated cell-specific offset sent by the base station via updated system information.

Optionally, in an embodiment of the present disclosure, the receiving module is further configured to:
receive the updated cell-specific offset sent by the base station in a case that the UE and the base station are in a non-geostationary orbit NGSO scenario.

Optionally, in an embodiment of the present disclosure, the receiving module is further configured to:
receive the configuration information sent by the base station via a UE-specific signaling; or
receive the configuration information sent by the base station via a common signaling.

Optionally, in an embodiment of the present disclosure, the updating module is further configured to:
in response to receiving the updated cell-specific offset, communicate with the base station within the time offset using a cell-specific offset before update, and/or, communicate with the base station using the updated cell-specific offset, after delaying for the time offset.

Optionally, in an embodiment of the present disclosure, the time offset is a fixed value or a configurable value.

Optionally, in an embodiment of the present disclosure, the updating module is further configured to:
communicate with the base station using a UE-specific offset within the time window; and communicate with the base station using the updated cell-specific offset after the time window.

Optionally, in an embodiment of the present disclosure, the updating module is further configured to:
perform, by the UE, a communication operation that requires to use a cell-specific offset based on the UE-specific offset within the time window; or
not perform, by the UE, a communication operation that requires to use a cell-specific offset within the time window.

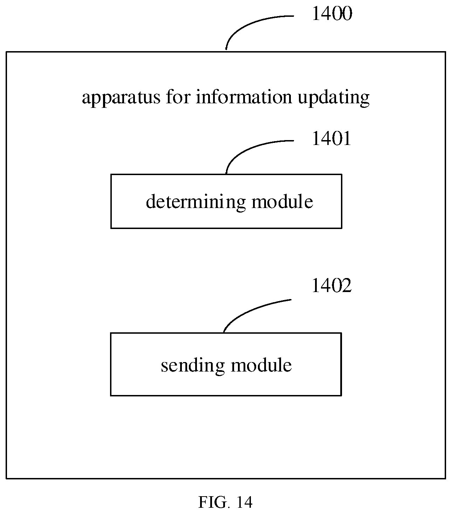

Fig. 14 is a schematic structural diagram of an apparatus for information updating provided by an embodiment of the present disclosure. As shown in Fig. 14, the apparatus 1400 may include:
a determining module 1401, configured to determine a time offset and/or a time window, in which the time offset is configured to indicate a delay effective time for an updated cell-specific offset, and the time window is configured to indicate an invalid time for the updated cell-specific offset; and
a sending module 1402, configured to send configuration information configured to indicate the time offset and/or the time window to a UE;
the sending module 1402 is further configured to send the updated cell-specific offset to the UE.

To sum up, in the apparatus for information updating provided by embodiments of the present disclosure, the UE receives the configuration information configured to indicate the time offset and/or the time window sent by the base station, in which the time offset is configured to indicate the delay effective time for the updated cell-specific offset, and the time window is configured to indicate the invalid time for the updated cell-specific offset. When the UE receives the updated cell-specific offset sent by the base station, the UE uses the updated cell-specific offset based on the time offset and/or the time window. It can be seen that in embodiments of the present disclosure, the effective time for the updated cell-specific offset is determined specifically through the time offset and/or the time window, so as to ensure that when each UE in the cell sends uplink information to the base station based on the updated cell-specific offset, the base station has the same understanding of cell-specific offsets used by different UEs, to ensure the reliability of communication.

Optionally, in embodiments of the present disclosure, the time offset is a fixed value or a configurable value.

Optionally, in an embodiment of the present disclosure, the determining module is further configured to:
determine the time offset based on a maximum round trip time RTT of signal transmission within a coverage area of the base station.

Optionally, in an embodiment of the present disclosure, the sending module is further configured to:
send the configuration information to the UE via a UE-specific signaling; or
send the configuration information to the UE via a common signaling.

Optionally, in an embodiment of the present disclosure, the sending module is further configured to:
determine whether the base station and the UE are in an NGSO scenario based on the ephemeris information, and receive the updated cell-specific offset sent by the base station in a case that the UE and the base station are in the NGSO scenario.

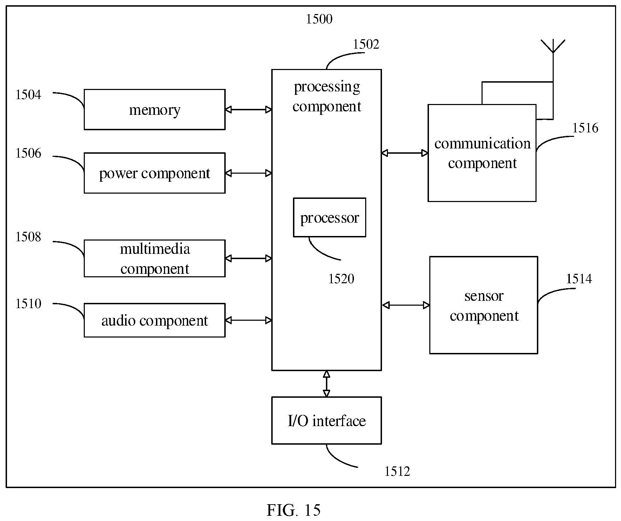

FIG. 15 is a block diagram of a user equipment UE 1500 according to an embodiment of the present disclosure. For example, the UE 1500 may be a mobile phone, computer, digital broadcast terminal, messaging device, game console, tablet device, medical device, fitness device, personal digital assistant, and the like.

Referring to FIG. 15, the UE 1500 may include at least one of the following components: a processing component 1502, a memory 1504, a power component 1506, a multimedia component 1508, an audio component 1510, an input/output (I/O) interface 1512, a sensor component 1513, and a communication component 1516.

The processing component 1502 typically controls overall operations of the UE 1500, such as the operations associated with display, telephone calls, data communications, camera operations, and recording operations. The processing component 1502 may include at least one processor 1511 to execute instructions to perform all or part of the steps in the above described method. Moreover, the processing component 1502 may include at least one module which facilitates the interaction between the processing component 1502 and other components. For example, the processing component 1502 may include a multimedia module to facilitate the interaction between the multimedia component 1508 and the processing component 1502.

The memory 1504 is configured to store various types of data to support the operation of the UE 1500. Examples of such data include instructions for any applications or methods operated on the UE 1500, contact data, phonebook data, messages, pictures, video, etc. The memory 1504 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 1506 provides power to various components of the UE 1500. The power component 1506 may include a power management system, at least one power source, and any other components associated with the generation, management, and distribution of power in the UE 1500.

The multimedia component 1508 includes a screen providing an output interface between the UE 1500 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front-facing camera and/or a rear-facing camera. When the UE 1500 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1510 is configured to output and/or input audio signals. For example, the audio component 1510 includes a microphone (MIC) configured to receive an external audio signal when the UE 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1513 includes one or more sensors to provide status assessments of various aspects of the UE 1500. For instance, the sensor component 1513 may detect an open/closed status of the UE 1500, relative positioning of components, e.g., the display and the keypad of the UE 1500, and the sensor component 1513 may further detect a change in position of the UE 1500 or a component of the UE 1500, a presence or absence of user contact with the UE 1500, an orientation or an acceleration/deceleration of the UE 1500, and a change in temperature of the UE 1500. The sensor component 1513 may include a proximity sensor configured to detect the presence of nearby objects without any physical contact. The sensor component 1513 may also include a light sensor, such as a CMOS or CCD image sensor, for use in imaging applications. In some embodiments, the sensor component 1513 may also include an accelerometer sensor, a gyroscope sensor, a magnetic sensor, a pressure sensor, or a temperature sensor.

The communication component 1516 is configured to facilitate communication, wired or wirelessly, between the UE 1500 and other devices. The UE 1500 can access a wireless network based on a communication standard, such as WiFi, 2G, 3G, 4G, 5G, or a combination thereof. In an exemplary embodiment, the communication component 1516 receives a broadcast signal or broadcast associated information from an external broadcast management system via a physical broadcast channel. In an embodiment, the communication component 1516 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the UE 1500 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

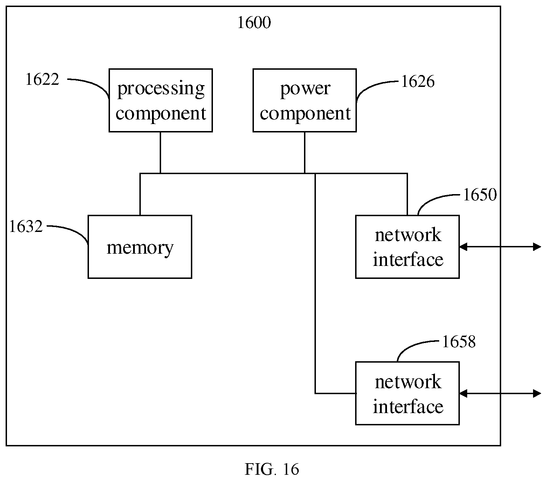

Fig. 16 is block diagram of a base station 1600 provided by an embodiment of the present disclosure. For example, the base station 1600 may be provided as a base station. Referring to FIG. 16, the base station 1600 includes a processing component 1611, which further includes one or more processors, and a memory resource represented by a memory 1632 for storing instructions executable by the processing component 1622, such as application programs. The application program stored in the memory 1632 may include one or more modules each corresponding to a set of instructions. In addition, the processing component 1610 is configured to execute instructions to perform the above method applied to the network device, for example, the method shown in FIG. 1.

The base station 1600 may also include a power component 1626 configured to perform power management of the base station 1600, a wired or wireless network interface 1650 configured to connect the base station 1600 to a network, and an input-output (I/O) interface 1658. The base station 1600 can operate based on an operating system stored in the memory 1632, such as Windows Server^{™}, Mac OS X^{™}, Unix^{™}, Linux^{™}, FreeBSD^{™} or the like.

In the above embodiments provided in the present disclosure, the methods provided in the embodiments of the present disclosure are introduced from the perspectives of the base station and the UE respectively. In order to implement the various functions in the method provided by the above embodiments of the present disclosure, the base station and the UE may include a hardware structure and a software module, and implement the above functions in the form of a hardware structure, a software module, or a hardware structure plus a software module. A certain function among the above-mentioned functions may be implemented in the form of a hardware structure, a software module, or a hardware structure plus a software module.

According to an embodiment of the present disclosure, there is provided a communication device. The communication device may include a transceiver module and a processing module. The transceiver module may include a sending module and/or a receiving module, the sending module is configured to implement a sending function, the receiving module is configured to implement a receiving function, and the transceiver module can implement the sending function and/or the receiving function.

The communication device may be a terminal device (such as the terminal device in the foregoing method embodiments), may also be an apparatus in the terminal device, and may also be an apparatus that can be matched and used with the terminal device. Alternatively, the communication device may be a network device, or an apparatus in the network device, or an apparatus that can be matched with the network device.

According to an embodiment of the present disclosure, there is provided another communication device. The communication device may be a network device, or a terminal device (such as the terminal device in the aforementioned method embodiments), or a chip, a chip system, or a processor that supports the network device to implement the above method, or it may be a chip, a chip system, or a processor that supports a terminal device to implement the above method. The device can be configured to implement the methods described in the above method embodiments, and for details, refer to the descriptions in the above method embodiments.

The communications device may include one or more processors. The processor may be a general purpose processor or a special purpose processor or the like. For example, it can be a baseband processor or a central processing unit. The baseband processor may be configured to process communication protocols and communication data, and the central processor may be configured to control communication devices (such as network devices, baseband chips, terminal device, terminal device chips, DUs or CUs, etc.), to perform a computer program and process data of the computer program.

Optionally, the communication device may further include one or more memories, on which computer programs may be stored. The processor executes the computer programs, so that the communication device performs the methods described in the foregoing method embodiments. Optionally, data may also be stored in the memory. The communication device and the memory can be set separately or integrated together.

Optionally, the communication device may further include a transceiver and an antenna. The transceiver may be referred to as a transceiver unit, a transceiver machine, or a transceiver circuit, etc., and is configured to implement a transceiver function. The transceiver may include a receiver and a sender, and the receiver may be called a receiving machine or a receiving circuit for implementing a receiving function; the sender may be called a sending machine or a sending circuit for implementing a sending function.

Optionally, the communication device may further include one or more interface circuits. The interface circuit is configured to receive code instructions and send them to the processor. The processor executes the code instructions to enable the communication device to execute the methods described in the foregoing method embodiments.

The communication device is a terminal device (such as the terminal device in the foregoing method embodiments): the processor is configured to execute any of the methods shown in FIGS. 1-7b.

The communication device is a network device: the transceiver is configured to execute the method shown in any one of Fig. 8-Fig. 12b.

In an implementation, the processor may include a transceiver for implementing receiving and sending functions. For example, the transceiver may be a transceiver circuit, or an interface, or an interface circuit. The transceiver circuits, interfaces or interface circuits for implementing the functions of receiving and sending can be separated or integrated together. The above-mentioned transceiver circuit, interface or interface circuit may be used for reading and writing code/data, or the above-mentioned transceiver circuit, interface or interface circuit may be used for signal transmission or transfer.

In an implementation, the processor may store a computer program, and the computer program runs on the processor to enable the communication device to execute the methods described in the foregoing method embodiments. A computer program may be embedded in a processor, in which case the processor may be implemented by hardware.

In an implementation manner, the communication device may include a circuit, and the circuit may implement the function of sending or receiving or communicating in the foregoing method embodiments. The processors and transceivers described in the present disclosure may be implemented on integrated circuits (ICs), analog ICs, radio frequency integrated circuits (RFICs), mixed-signal ICs, application specific integrated circuits (ASICs), printed circuit boards (PCB), electronic device, etc. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device (such as the terminal device in the foregoing method embodiments), but the scope of the communication device described in the present disclosure is not limited thereto, and the structure of the communication device may not be limited limits. A communication device may be a stand-alone device or may be part of a larger device. For example the communication device may be:
(1) a stand-alone IC, a chip, or a chip system or subsystem;
(2) a set of one or more ICs, optionally, the set of ICs may also include storage components for storing data and computer programs;
(3) an ASIC, such as a modem;
(4) a module that can be embedded in other devices;
(5) a receiver, a terminal device, an intelligent terminal device, a cellular phone, a wireless device, a handset, a mobile unit, a vehicle-mounted device, a network device, a cloud device, artificial intelligence device, etc.;
(6) other devices.

For the case where the communications device may be a chip or a chip system, the chip includes a processor and an interface. The number of processors may be one or more, and the number of interfaces may be more than one.

Optionally, the chip also includes a memory, which is configured to store necessary computer programs and data.

Those skilled in the art can also understand that various illustrative logical blocks and steps listed in the embodiments of the present disclosure can be implemented by electronic hardware, computer software, or a combination of both. Whether such functions are implemented by hardware or software depends on the specific application and overall system design requirements. Those skilled in the art may use various methods to implement the described functions for each specific application, but such implementation should not be understood as exceeding the protection scope of the embodiments of the present disclosure.

An embodiment of the present disclosure also provides a system for determining a duration of a side link, the system includes a communication device as a terminal device (such as the first terminal device in the method embodiment above) and a communication device as a network device in the foregoing embodiments. Alternatively, the system includes a communication device as a terminal device (such as the first terminal device in the foregoing method embodiment) and a communication device as a network device in the foregoing embodiments.

The present disclosure also provides a readable storage medium on which instructions are stored. When the instructions are performed by a computer, the functions of any one of the above method embodiments are implemented.

The present disclosure also provides a computer program product, which implements the functions of any one of the above method embodiments when the computer program product is performed by a computer.

In the above embodiments, all or part of them may be implemented by software, hardware, firmware or any combination thereof. When implemented using software, all or part of them may be implemented in the form of a computer program product. The computer program product includes one or more computer programs. When the computer program is loaded and executed on the computer, all or part of the processes or functions according to the embodiments of the present disclosure will be generated. The computer may be a general purpose computer, a special purpose computer, a computer network, or other programmable devices. The computer program may be stored in or sent from one computer-readable storage medium to another computer-readable storage medium, for example, the computer program may be transmitted from a website, computer, server or data center to another website site, computer, server or data center in a wired (such as coaxial cable, optical fiber, digital subscriber line (DSL)) or wireless (such as infrared, wireless, microwave, etc.) manner. The computer-readable storage medium may be any available medium that can be accessed by a computer, or a data storage device such as a server or a data center integrated with one or more available media. The available medium may be a magnetic medium (for example, a floppy disk, a hard disk, a magnetic tape), an optical medium (for example, a high-density digital video disc (digital video disc, DVD)), or a semiconductor medium (for example, a solid state disk (solid state disk, SSD)) etc.

Those of ordinary skill in the art can understand that the first, second, and other numbers involved in the present disclosure are only for convenience of description, and are not configured to limit the scope of the embodiments of the present disclosure, and also indicate the sequence.

At least one in the present disclosure can also be described as one or more, and more than one can be two, three, four or more, and the present disclosure is not limited. In the embodiments of the present disclosure, for a technical feature, the technical feature is distinguished by "first", "second", "third", "A", "B", "C" and "D", etc. The technical features described with "first", "second", "third", "A", "B", "C" and "D" have no sequence or order of magnitude among the technical features described.

Other embodiments of the invention will be readily apparent to those skilled in the art from consideration of the specification and practice of the invention disclosed herein. The present disclosure is intended to cover any modification, use or adaptation of the present invention, these modifications, uses or adaptations follow the general principles of the present invention and include common knowledge or conventional technical means in the technical field not disclosed in the present disclosure. The specification and embodiments are to be considered exemplary only, with a true scope and spirit of the present disclosure being indicated by the following claims.

It should be understood that the present disclosure is not limited to the precise constructions which have been described above and shown in the drawings, and various modifications and changes may be made without departing from the scope thereof. The scope of the present disclosure is limited only by the appended claims

## Claims

1. A method for information updating, applied to a user equipment (UE) supporting satellite communication, comprising:
receiving an updated cell-specific offset sent by a base station;
receiving configuration information configured to indicate a time offset and/or a time window sent by the base station, wherein the time offset is configured to indicate a delay effective time for the updated cell-specific offset, and the time window is configured to indicate an invalid time for the updated cell-specific offset; and
using the updated cell-specific offset based on the time offset and/or the time window.

2. The method according to claim 1, wherein receiving the updated cell-specific offset sent by the base station comprises:
receiving the updated cell-specific offset sent by the base station via updated system information.

3. The method according to claim 1, wherein receiving the updated cell-specific offset sent by the base station comprises:
receiving the updated cell-specific offset sent by the base station in a case that the UE and the base station are in a non-geostationary orbit (NGSO) scenario.

4. The method according to claim 1, wherein receiving the configuration information configured to indicate the time offset and/or the time window sent by the base station comprises at least one of:
receiving the configuration information sent by the base station via a UE-specific signaling; or
receiving the configuration information sent by the base station via a common signaling.

5. The method according to claim 1, wherein using the updated cell-specific offset based on the time offset comprises:
in response to receiving the updated cell-specific offset, communicating with the base station using a cell-specific offset before update, within the time offset, and/or, communicating with the base station using the updated cell-specific offset, after delaying for the time offset.

6. The method according to claim 4, wherein the time offset is a fixed value or a configurable value.

7. The method according to claim 1, wherein using the updated cell-specific offset based on the time window comprises:
communicating with the base station using a UE-specific offset within the time window; and communicating with the base station using the updated cell-specific offset after the time window.

8. The method according to claim 7, wherein communicating with the base station using the UE-specific offset within the time window comprises at least one of:
performing, by the UE, a communication operation that requires to use a cell-specific offset, based on the UE-specific offset within the time window; or
not performing, by the UE, a communication operation that requires to use a cell-specific offset, within the time window.

9. A method for information updating, applied to a base station supporting satellite communication, comprising:
determining a time offset and/or a time window, wherein the time offset is configured to indicate a delay effective time for an updated cell-specific offset, and the time window is configured to indicate an invalid time for the updated cell-specific offset;
sending configuration information configured to indicate the time offset and/or the time window to a UE; and
sending the updated cell-specific offset to the UE.

10. The method according to claim 9, wherein the time offset is a fixed value or a configurable value.

11. The method according to claim 9, wherein determining the time offset comprises:
determining the time offset based on a maximum RTT of signal transmission within a coverage area of the base station.

12. The method according to claim 9, wherein sending the configuration information configured to indicate the time offset and/or the time window to the UE comprises at least one of:
sending the configuration information to the UE via a UE-specific signaling; or
sending the configuration information to the UE via a common signaling.

13. The method according to claim 9, wherein sending the updated cell-specific offset to the UE comprises:
determining whether the base station and the UE are in an NGSO scenario based on ephemeris information, and receiving the updated cell-specific offset sent by the base station in a case that the UE and the base station are in the NGSO scenario.

14. An apparatus for information updating, comprising:
a receiving module, configured to receive an updated cell-specific offset sent by a base station;
the receiving module is further configured to receive configuration information configured to indicate a time offset and/or a time window sent by the base station, wherein the time offset is configured to indicate a delay effective time for the updated cell-specific offset, and the time window is configured to indicate an invalid time for the updated cell-specific offset; and
an updating module, configured to use the updated cell-specific offset based on the time offset and/or the time window.

15. An apparatus for information updating, comprising:
a determining module, configured to determine a time offset and/or a time window, wherein the time offset is configured to indicate a delay effective time for an updated cell-specific offset, and the time window is configured to indicate an invalid time for the updated cell-specific offset; and
a sending module, configured to send configuration information configured to indicate the time offset and/or the time window to a UE;
wherein the sending module is further configured to send the updated cell-specific offset to the UE.

16. A communication device, comprising a processor and a memory, wherein a computer program is stored in the memory, and the processor executes the computer program stored in the memory, to enable the device to perform the method according to any one of claims 1 to 8.

17. A communication device, comprising a processor and a memory, wherein a computer program is stored in the memory, and the processor executes the computer program stored in the memory, to enable the device to perform the method according to any one of claims 9 to 13.

18. A communication device, comprising: a processor and an interface circuit; wherein,
the interface circuit is configured to receive code instructions and transmit the code instructions to the processor; and
the processor is configured to run the code instructions to perform the method according to any one of claims 1-8.

19. A communication device, comprising: a processor and an interface circuit; wherein,
the interface circuit is configured to receive code instructions and transmit the code instructions to the processor; and
the processor is configured to run the code instructions to perform the method according to any one of claims 9-13.

20. A computer-readable storage medium having stored thereon instructions, when being executed, enable the method according to any one of claims 1-8 to be implemented.

21. A computer-readable storage medium having stored thereon instructions, when being executed, enable the method according to any one of claims 9-13 to be implemented.
